# FASCICULE DE BREVET EUROPEEN

(11) **EP 0 984 843 B1**
(45) Date de publication et mention de la délivrance du brevet: **23.04.2003**
(21) Numéro de dépôt: 98916784.6
(22) Date de dépôt: 12.05.1998
(51) Int. Cl.: B23K 7/10

(54) **DISPOSITIF DE SUPPORT COMBINE POUR EXTINCTEUR ET CHALUMEAU**
KOMBINIERTE BRENNER- UND FEUERLÖSCHESVORRICHTUNG
COMBINED SUPPORT DEVICE FOR TORCH AND EXTINGUISHER

(30) Priorité: 26.05.1997 FR 9706562
(43) Date de publication de la demande: 15.03.2000
(73) Titulaire: Etablissement Cantonal D'Assurance Immobiliere (ecai), 20000 Neuchatel (CH)
(72) Inventeur: GREMAUD, Armand, CH-2052 Fontainemelon (CH)
(74) Mandataire: Gresset, Jean
(86) Numéro de dépôt international: CH9800194
(87) Numéro de publication internationale: WO98053947

(56) Documents cités:
- DE-U- 9 116 056
- DE-U- 9 303 224
- DE-U- 9 318 323

## Description

La présente invention concerne un dispositif de support combiné, notamment pour un extincteur, comportant un bâti, un logement pour ledit extincteur, des moyens de préhension solidaires dudit bâti, des moyens d'accrochage et des moyens pour reposer sur une surface plane.

Dans de nombreux secteurs industriels, tels que la ferblanterie, les installations sanitaires, les installations de chauffage, il est nécessaire d'utiliser un chalumeau pour divers travaux, tels que le soudage, le brasage, l'oxycoupage et le décapage. Ces travaux sont réalisés à feu ouvert et peuvent donc entraîner des risques importants d'incendie par inflammation des matières combustibles situées dans les parages immédiats de la flamme du chalumeau. De plus, la flamme du chalumeau pouvant atteindre des températures supérieures à 3000°C, des incendies risquent également d'être provoqués par effet indirect, notamment par des étincelles ou des gouttes de métal en fusion ou l'action prolongée d'un rayonnement de la chaleur, même hors de la zone de formation de la flamme.

A ces risques s'ajoute celui créé par le chalumeau lui-même lorsqu'il n'est pas utilisé. En effet, les opérations effectuées avec un chalumeau nécessitent de fréquentes interruptions durant lesquelles la flamme n'est pas éteinte. Si le chalumeau est alors posé négligemment sur le sol ou sur un quelconque objet servant de support, il peut provoquer un incendie.

C'est pourquoi, il est nécessaire que l'utilisateur du chalumeau dispose, sur son lieu d'intervention, d'un extincteur qu'il peut déplacer facilement et d'un support approprié pour poser son chalumeau en toute sécurité lorsqu'il ne l'utilise pas.

La présente invention se propose d'apporter une solution à ce problème de sécurité en offrant un dispositif de support combiné tel que défini en préambule et caractérisé en ce qu'il comporte, en outre, des moyens pour supporter la buse d'un chalumeau et des moyens pour isoler la flamme dudit chalumeau de l'environnement dans lequel il se trouve.

Selon la forme de réalisation préférée du dispositif, le logement pour l'extincteur comporte plusieurs bagues concentriques et le bâti comporte deux montants auxquels lesdites bagues sont fixées en étant régulièrement espacées.

De préférence, les moyens de préhension du dispositif comportent une poignée solidaire des montants du bâti et deux bras pourvus à une de leurs extrémités d'un tronçon libre replié. Ces tronçons libres forment les moyens d'accrochage du dispositif.

Les moyens pour poser le dispositif sur une surface plane comportent trois pieds, deux desdits pieds étant formés par les extrémités des montants du bâti, et le troisième étant fixé en un point des bagues du logement équidistant desdits montants.

De façon avantageuse, la bague supérieure du logement comporte un secteur ouvert et les moyens pour supporter la buse d'un chalumeau comportent :
- une bague additionnelle fixée aux montants du bâti, sous la bague supérieure,
- une encoche en forme de V ménagée sur le bord supérieur de ladite bague additionnelle,
- et une encoche en forme de V renversé, ménagée sur le bord inférieur de ladite bague en regard de l'encoche en forme de V,
lesdits moyens permettant le support et l'immobilisation de la buse du chalumeau lorsque le dispositif est en position verticale.

Dans une autre forme de réalisation, les moyens pour supporter la buse d'un chalumeau comportent
- un élément intermédiaire fixé aux montants du bâti entre les moyens de préhension et le logement,
- et une rainure ménagée dans ledit élément intermédiaire pour recevoir, guider et empêcher le recul de la buse du chalumeau lors que le dispositif est en position horizontale.

De préférence, les moyens pour isoler la flamme du chalumeau comportent:
- une plaque métallique cintrée disposée le long du logement sur son secteur compris entre les deux montants,
- et une couche de matière isolante placée dans l'espace défini entre ladite plaque et ledit logement.

La présente invention sera mieux comprise en référence à la description d'un exemple de réalisation préféré et des dessins annexés dans lesquels :
- les figures 1 et 1A représentent une vue de face du dispositif selon l'invention en position verticale, la figure 1A étant une vue de détail d'une partie de la figure 1,
- la figure 2 représente une vue latérale de ce même dispositif, et
- la figure 3 représente le dispositif utilisé en position horizontale.

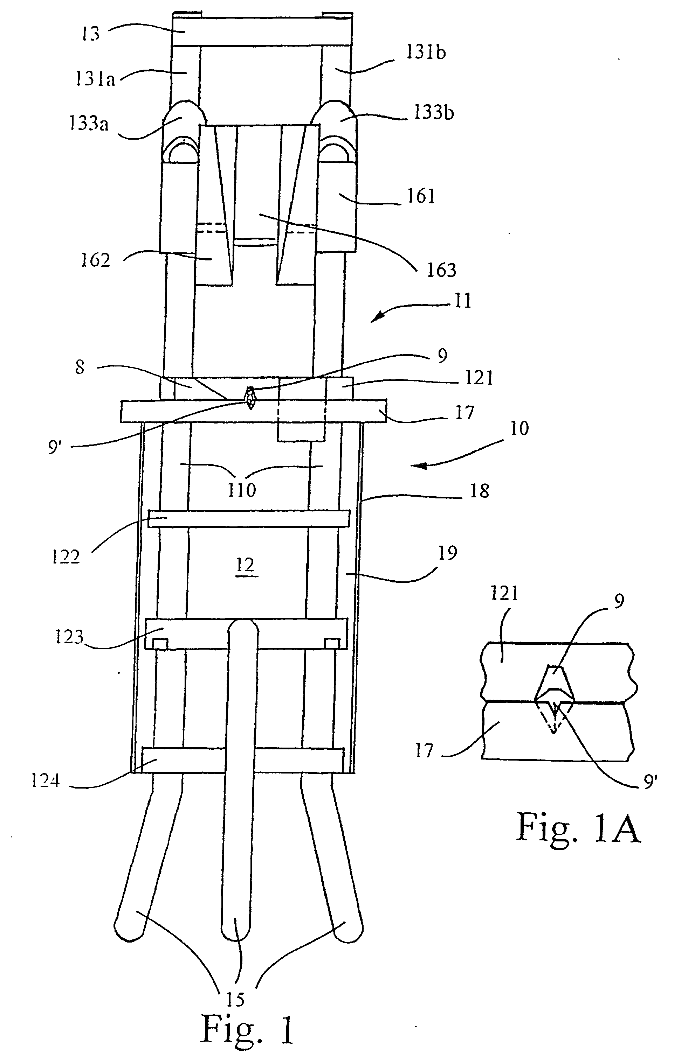

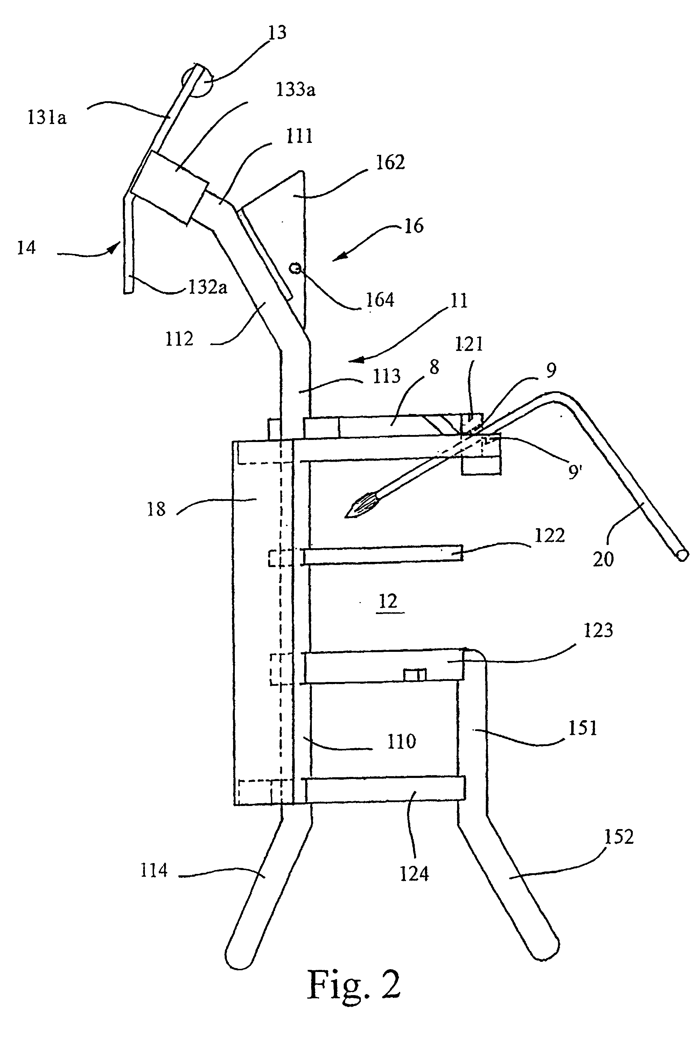

En référence aux figures 1, 1A et 2, le dispositif de support 10, représenté en position verticale, comporte un bâti 11, un logement 12 destiné à recevoir un extincteur du type agréé par les établissements concernés, des moyens de préhension sous la forme d'une poignée 13 permettant de le transporter facilement, des moyens d'accrochage 14 permettant de l'accrocher par exemple à un tuyau ou à des lattes se trouvant sur le lieu où sont effectués les travaux, et des pieds 15 pour pouvoir le poser sur le sol ou toute autre surface plane. Le logement 12 et la poignée 13 sont solidaires du bâti 11.

Le bâti 11 se compose de deux montants cylindriques 110 symétriques réalisés d'une seule pièce, par exemple en acier, et comportant quatre tronçons respectivement 111, 112, 113 et 114. Le tronçon central 113 est rectiligne et se prolonge vers le haut par le tronçon 112 faisant un angle d'environ 30° par rapport au tronçon 113. Le tronçon 112 est lui-même prolongé par le tronçon d'extrémité 111 qui fait également un angle d'environ 30° par rapport au tronçon 112. Le tronçon 114 formant l'extrémité inférieure du tronçon 113 fait un angle d'environ 30° avec le tronçon 113 mais est, en outre, situé dans un plan vertical faisant un angle d'environ 30° avec le plan vertical contenant les tronçons 111, 112 et 113.

Le logement 12 destiné à recevoir l'extincteur est une cage définie par quatre bagues concentriques 121, 122, 123 et 124 ayant toutes le même diamètre extérieur. Les bagues 121 à 123 ont un diamètre intérieur identique, mais la bague 124 a un diamètre inférieur au diamètre des trois autres bagues pour former le fond du logement. La bague supérieure 121 comporte latéralement un secteur ouvert 8 sur un angle d'environ 90°, ainsi qu'une encoche 9, sensiblement en forme de V, sur son bord inférieur, dont la fonction sera définie plus loin.

Chaque bague de la cage est pourvue, sur son périmètre extérieur, de deux chanfreins cylindriques espacés d'environ 90° et agencés pour coopérer chacun avec un des montants 110 afin de permettre la fixation des bagues aux montants en étant régulièrement espacés et par des moyens connus en soi.

Les moyens de préhension du dispositif 10 se composent d'une poignée 13 cylindrique dont chaque extrémité comporte un dégagement plan agencé pour coopérer par vissage avec une extrémité d'un bras 131a, respectivement 131b de section rectangulaire. Ces deux bras sont, en outre, pourvus à leur autre extrémité d'un tronçon libre replié 132a, respectivement 132b faisant un angle d'environ 30° avec l'axe desdits bras, ces tronçons libres formant les moyens d'accrochage 14 du dispositif sur une latte ou un tuyau se trouvant à proximité de l'endroit où l'ouvrier est entrain de souder. Les tronçons rectilignes de ces deux bras sont, en outre, solidaires par vissage de deux douilles cylindriques 133a et 133b. La longueur de la poignée 13 et le diamètre intérieur des douilles sont tels que l'ensemble formé par la poignée 13 solidaire des deux bras 131a et 131b et les deux douilles s'emboîte dans les tronçons 111 des montants 110.

Les pieds 15 du dispositif sont au nombre de trois, deux desdits pieds étant constitués par les deux tronçons 114 des montants 110. Le troisième pied comporte un tronçon rectiligne 151 permettant sa fixation en un point équidistant des montants 110 respectivement aux bagues 123 et 124 du logement 12. Ce tronçon rectiligne 151 se prolonge par un tronçon 152 identique aux tronçons 114 formant les deux autres pieds.

Le dispositif 10 comporte, en outre, un bague intermédiaire 16 solidaire des tronçons 113 des montants 110. Cet élément 16 se compose d'une plaque 161, fixée par vissage aux tronçons 113, sur laquelle est vissé un support de section triangulaire 162 pourvu d'une rainure centrale 163 en forme de queue d'aronde. Ce support 162 est, par ailleurs, pourvu d'un alésage traversant horizontal 164 destiné à recevoir une goupille (non représentée).

Le dispositif combiné comprend, par ailleurs, une bague extérieure 17 également concentrique aux bagues du logement 12 mais dont le diamètre intérieur est tel que, lorsqu'elle est fixée aux montants 110, ceux-ci sont emprisonnés entre les bagues définissant le logement 12 de l'extincteur et la bague 17. Celle-ci est fixée aux montants 110 directement sous la bague 121 et sert de support à une plaque de protection 18 cintrée recouvrant le secteur périphérique de la bague 17 défini entre les deux montants 110. La plaque 18 s'étend sur toute la longueur du logement 10. Elle est réalisée en acier et a une épaisseur d'environ 1mm. Une couche de laine de roche 19 est intercalée entre le logement 12 et la plaque 18 à laquelle elle fixée de manière amovible par des vis non représentées. La bague 17 est, en outre, pourvue sur son bord extérieur d'une encoche 9', sensiblement en forme de V inversé, faisant face à l'encoche 9 de la bague 121 du logement 12.

Le principe d'utilisation du dispositif combiné selon l'invention est le suivant. Lorsqu'il est utilisé pour servir de support à un extincteur, celui-ci est introduit verticalement dans le logement 12, sa poignée de déclenchement s'engageant dans la rainure 163 de l'élément 16 afin de l'empêcher de tourner. Lors de son déplacement, il est maintenu dans son logement par une goupille traversante logée dans l'alésage 164. Lorsque l'ouvrier est sur son lieu de travail et qu'il utilise un chalumeau, il doit avoir l'extincteur à portée de main et hors de son support. A ce moment là, le dispositif peut alors être utilisé comme support pour le chalumeau lors des interruptions pendant lesquelles ledit chalumeau n'est pas éteint.

Si, comme représenté sur la figure 2 , il s'agit d'un chalumeau oxyacétylène, la buse 20 se présente sous la forme d'un long tube coudé de faible diamètre et le dispositif support 10 est alors utilisé verticalement. La buse 20 est introduite entre la bague 17 et la bague 121 du logement 12 par l'ouverture 8 de la bague 121. Elle est ensuite posée dans l'encoche 9' de la bague 17 et maintenue en position inclinée vers le bas par l'encoche correspondante 9 de la bague 121. Dans cette position, la flamme est dirigée contre la couche 19 de laine de roche et est donc isolée de l'environnement dans lequel se trouve le chalumeau.

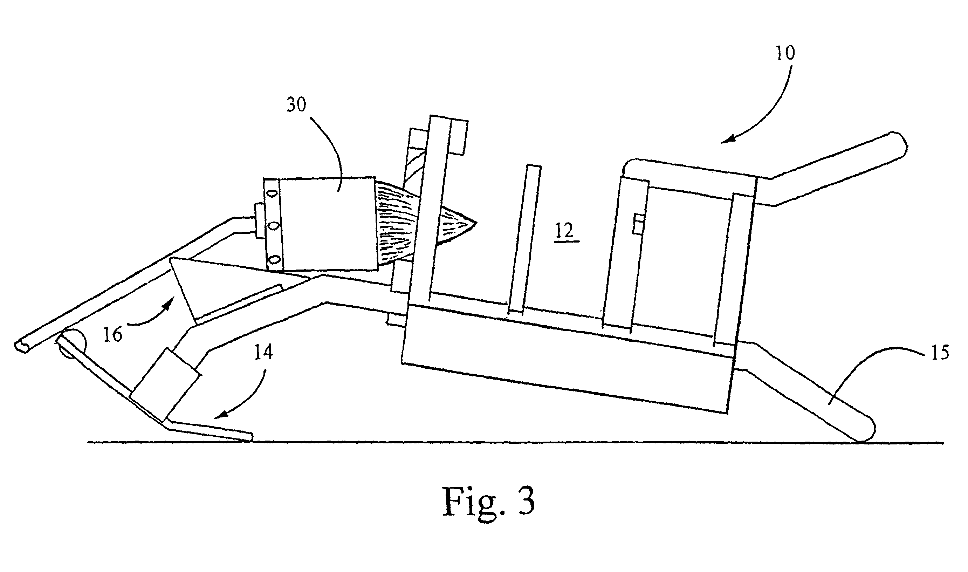

Si, comme représenté sur la figure 3, il s'agit d'un chalumeau propane-butane, la buse 30 se présente sous la forme d'un tube plus court ayant un diamètre de l'ordre de plusieurs centimètres et le dispositif support est alors utilisé horizontalement. Le dispositif est couché et est en appui sur le sol par les deux pieds 15 formés par les extrémités des montants 110 et les moyens d'accrochage 14. La buse 30 est alors introduite horizontalement dans le dispositif par le haut du logement 12 et posée dans la rainure 163 de l'élément 16. La flamme se trouve ainsi au-dessus de la couche de laine de roche 19 qui l'isole de l'environnement proche.

Ce dispositif combiné permet ainsi de répondre à toutes les normes de sécurité requises lors de l'utilisation d'un chalumeau sur un chantier.

## Revendications

1. Dispositif de support combiné, notamment pour un extincteur, comportant un bâti (11), un logement (12) pour ledit extincteur, des moyens de préhension solidaires dudit bâti, des moyens d'accrochage et des moyens pour reposer sur une surface plane, **caractérisé en ce qu'**il comporte, en outre, des moyens (9, 9'; 163) pour supporter la buse (20; 30) d'un chalumeau et des moyens (18, 19) pour isoler la flamme dudit chalumeau de l'environnement dans lequel il se trouve.

2. Dispositif selon la revendication 1, **caractérisé en ce que** le logement (12) pour ledit extincteur comporte plusieurs bagues concentriques (121 à 124).

3. Dispositif selon la revendication 2, **caractérisé en ce que** le bâti (11) comporte deux montants (110) auxquels lesdites bagues sont fixées en étant régulièrement espacées.

4. Dispositif selon la revendication 3, **caractérisé en ce que** les moyens de préhension comportent une poignée (13) solidaire desdits montants.

5. Dispositif selon la revendication 4, **caractérisé en ce que** les moyens de préhension comportent deux bras (131a, 131b), pourvus à une de leurs extrémités d'un tronçon libre (132a, 132b) replié.

6. Dispositif selon la revendication 5, **caractérisé en ce que** les tronçons libres (132a, 132b) des bras (131a, 131b) sont agencés pour former les moyens d'accrochage (14) dudit dispositif.

7. Dispositif selon la revendication 3, **caractérisé en ce que** les moyens pour le poser sur une surface plane comportent trois pieds (15), deux desdits pieds étant formés par les extrémités (114) des montants (110), le troisième pied étant fixé à un point des bagues (123, 124) dudit logement (12) équidistant desdits montants (110).

8. Dispositif selon la revendication 3, **caractérisé en ce que** la bague supérieure (121) du logement (12) comporte un secteur ouvert (8) et **en ce que** les moyens pour supporter la buse (20) d'un chalumeau comportent :
- une bague additionnelle (17) fixée auxdits montants (110) sous la bague supérieure (121),
- une encoche (9) en forme de V ménagée sur le bord supérieur de ladite bague additionnelle,
- et une encoche (9') en forme de V renversé ménagée sur le bord inférieur de ladite bague supérieure (121) en regard de l'encoche (9) en forme de V,
lesdits moyens permettant le support et l'immobilisation de la buse du chalumeau lorsque le dispositif est en position verticale.

9. Dispositif selon la revendication 3, **caractérisé en ce que** les moyens pour supporter la buse (30) d'un chalumeau comportent :
- un élément intermédiaire (16) fixé auxdits montants entre lesdits moyens de préhension (13) et ledit logement (12),
- et une rainure (163) ménagée dans ledit élément intermédiaire (16) pour recevoir, guider et empêcher le recul de la buse du chalumeau lorsque le dispositif est en position horizontale.

10. Dispositif selon la revendication 3, **caractérisé en ce que** les moyens pour isoler la flamme du chalumeau comportent:
- une plaque métallique cintrée (19) disposée le long dudit logement sur son secteur compris entre les deux montants (110),
- et une couche de matière isolante (19) placée dans l'espace défini entre ladite plaque (18) et ledit logement (12).

## Patentansprüche

1. Kombinierte Haltevorrichtung, insbesondere für ein Löschgerät, mit einem Halterahmen (11), einem Fach (12) für das besagte Löschgerät, Greifmitteln, die fest mit dem besagten Halterahmen verbunden sind, Mitteln zum Aufhängen und Mitteln zum Abstellen auf einer ebenen Oberfläche, **dadurch gekennzeichnet, dass** die Vorrichtung unter anderem über Haltemittel (9, 9'; 163) der Düse (20; 30) eines Brenners und über Mittel (18, 19) zur Isolierung der Flamme des besagten Brenners aus seiner Umgebung verfügt.

2. Vorrichtung nach Anspruch 1, **dadurch gekennzeichnet, dass** das besagte Fach (12) für das besagte Löschgerät über mehrere konzentrische Ringe (121 bis 124) verfügt.

3. Vorrichtung nach Anspruch 2, **dadurch gekennzeichnet, dass** der besagte Halterahmen (11) über zwei Ständer (110) verfügt, auf denen die besagten Ringe in gleichmäßigem Abstand befestigt sind.

4. Vorrichtung nach Anspruch 3, **dadurch gekennzeichnet, dass** die besagten Greifmittel über einen Griff (13) verfügen, der fest mit den besagten Ständern verbunden ist.

5. Vorrichtung nach Anspruch 4, **dadurch gekennzeichnet, dass** die besagten Greifmittel über zwei Arme verfügen (131a, 131 b), die an einem ihrer Enden mit einem freien, geknickten Abschnitt (132 a, 132b) ausgestattet sind.

6. Vorrichtung nach Anspruch 5, **dadurch gekennzeichnet, dass** die besagten freien Abschnitte (132 a, 132 b) der Arme (131 a, 132 b) so angeordnet sind, dass sie Mittel zum Aufhängen (14) der besagten Vorrichtung bilden.

7. Vorrichtung nach Anspruch 3, **dadurch gekennzeichnet, dass** die besagten Mittel zum Abstellen auf einer ebenen Oberfläche über drei Füße (15) verfügen, wobei zwei der besagten Füße aus den Enden (114) der besagten Ständer (110) gebildet werden und der dritte Fuß auf einem Punkt der Ringe (123, 124) des besagten Fachs (12) befestigt und abstandsgleich zu den besagten Ständern (110) ist.

8. Vorrichtung nach Anspruch 3, **dadurch gekennzeichnet, dass** der besagte höchste Ring (121) des Fachs (12) über einen offenen Bereich (8) verfügt und dadurch, dass die Mittel zum Halten der Düse (20) eines Brenners über:
- einen weiteren Ring (17), der an den besagten Ständern (110) unter dem höchsten Ring (121) befestigt ist,
- eine V-förmige Kerbe (9) am oberen Rand des besagten Zusatzringes,
- und eine umgekehrte V-förmige Kerbe (9) am Innenrand des besagten Zusatzringes (121) gegenüber der V-förmigen Kerbe (9) verfügen,
wobei die besagten Mittel die Halterung und Feststellung der Brennerdüse ermöglichen, wenn sich die Vorrichtung in vertikaler Stellung befindet.

9. Vorrichtung nach Anspruch 3, **dadurch gekennzeichnet, dass** die Mittel zum Halten der Düse (30) eines Brenners über:
- ein Zwischenelement (16), das an den besagten Ständern zwischen den besagten Greifmitteln (13) und dem besagten Fach (12),
- und eine Rille (163) im besagten Zwischenelement (16) zur Aufnahme, Führung und Verhinderung eines Rückzuges der Brennerdüse verfügen, wenn sich die Vorrichtung in horizontaler Stellung befindet.

10. Vorrichtung nach Anspruch 3, **dadurch gekennzeichnet, dass** die Mittel zur Isolierung der Flamme des Brenners über:
- eine gewölbte Metallplatte (19), die entlang des besagten Faches im Bereich zwischen den beiden Ständern (110) ausgerichtet ist,
- und eine Isolierschicht (19) im Bereich zwischen der besagten Platte (18) und dem besagten Fach (12) verfügen.

## Claims

1. Combined support device, in particular for an extinguisher, including a frame (11), a housing (12) for said extinguisher, prehensile means integral with said frame, catching means and means for resting on a plane surface, **characterised in that** it further includes means (9, 9'; 163) for supporting the nozzle (20; 30) of a torch and means (18, 19) for insulating the flame of said torch from the environment in which it is situated.

2. Device according to claim 1, **characterised in that** the housing (12) for said extinguisher includes several concentric rings (121 to 124).

3. Device according to claim 2, **characterised in that** the frame (11) includes two vertical struts (110) to which said rings are fixed at regular intervals.

4. Device according to claim 3, **characterised in that** the prehensile means include a handle (13) integral with said vertical struts.

5. Device according to claim 4, **characterised in that** the prehensile means include two arms (131a, 131b) provided, at one of their ends, with a free bent section (132a, 132b).

6. Device according to claim 5, **characterised in that** the free sections (132a, 132b) of the arms (131a, 131b) are arranged to form the catching means (14) of said device.

7. Device according to claim 3, **characterised in that** the means for placing it on a plane surface include three legs (15), two of said legs being formed by the ends (114) of the vertical struts (110), the third leg being fixed to the rings (123, 124) of said housing (12) at a point which is equidistant from said vertical struts (110).

8. Device according to claim 3, **characterised in that** the top ring (121) of the housing (12) includes an open sector (8) and **in that** the means for supporting a torch nozzle (20) include:
- an additional ring (17) fixed to the vertical struts (110) under the top ring (121),
- a V-shaped notch (9) arranged on the top edge of said additional ring,
- and an inverted V-shaped notch (9') arranged on the bottom edge of said top ring (121) opposite the V-shaped notch (9),
said means allowing the torch nozzle to be supported and immobilised when the device is in a vertical position.

9. Device according to claim 3, **characterised in that** the means for supporting the torch nozzle (30) include:
- an intermediate element (16) fixed to the vertical struts between said prehensile means (13) and said housing (12),
- and a groove (163) arranged in said intermediate element (16) for accommodating, guiding and preventing the backward movement of the torch nozzle when the device is in a horizontal position.

10. Device according to claim 3, **characterised in that** the means for insulating the torch flame include:
- a curved metal plate (19) arranged along said housing over the section thereof comprised between the two vertical struts (110),
- and a layer of insulating material (19) placed in the space defined between said plate (18) and said housing (12).
